Europäisches Patentamt

European Patent Office

Office européen des brevets

(19)

(11) Publication number: **0 283 233**
**A2**

(12) **EUROPEAN PATENT APPLICATION**

(21) Application number: **88302224.6**

(22) Date of filing: **14.03.88**

(51) Int. Cl.⁴: **B42D 15/02**

(30) Priority: **14.03.87 GB 8706095**

(43) Date of publication of application:
**21.09.88 Bulletin 88/38**

(84) Designated Contracting States:
**AT BE CH DE ES FR GB GR IT LI LU NL SE**

(71) Applicant: **HOLOFAX LIMITED**
**Netherwood Road**
**Rotherwas Hereford HR2 6JZ(GB)**

(72) Inventor: **Kirk, Michael Tayler**
**Clarach Hawthorne Lane**
**Ross-on-Wye, HR9 5BG(GB)**

(74) Representative: **Cooper, Derek Robert et al**
**E.N. Lewis & Taylor 144 New Walk**
**Leicester LE1 7JA(GB)**

(54) Security badge.

(57) A security item such as a badge comprises a piece of information (e.g. a photograph of an individual) displayed both as an object (14) and as an identical holographic image (14') within a common visual field, there being parallax between the information in its object form (14) and the observed holographic image (14'). In order to produce the security item, the piece of information is placed a distance behind a holographic film (13) during exposure, the developed film (13) and the piece of information (14) itself are bonded to a common substrate (20), and the assembly is encapsulated within a plastics holder (H).

FIG 2

## Security item

This invention relates to a security item, such as a badge or a pass to indicate the identity of the wearer or user, and to a method of producing such a security item.

Security badges and passes are designed to be inspected visually by trained personnel to identify the wearer or user, usually by means of a photograph. For high security applications, such badges or passes often contain matter which is difficult to forge. However it is possible that an impostor can substitute his/her photograph for that of the authorised user without such substitution being readily detectable.

It is an object of the present invention to provide a security item, such as a badge or pass, which is very difficult indeed to forge.

According to one aspect of the present invention, a security item comprises at least one piece of information displayed as an object and an identical or similar holographic image within a common visual field.

Preferably, the information in its object form and the observed holographic image exhibit parallax.

In a particular embodiment, the information in object form and the holographic film are secured to a common substrate, with the information in object form preferably being sandwiched between the substrate and the holographic film. Alternatively or additionally, the information in object form, and the film can be encapsulated within a plastics holder with the holographic film preferably being bonded chemically to the holder.

The holographic image can be formed by a reflection hologram, in which case a film bearing the holographic image is desirably mounted on a substrate which incorporates a dark-coloured area at least in the region of the observed holographic image.

For ease of viewing, the holographic image is desirably formed by a white light reflection hologram.

The said piece of information preferably comprises a photograph of an individual, and may also include personal details (such as the name and/or address) of that individual.

According to a second aspect of the present invention, a method of producing a security item comprises forming by means of an exposure on holographic film a holographic image of a piece of information, developing the holographic image, and disposing in a common visual field the developed film and, in object form, the same or a similar piece of information as was used to produce the holographic image.

Preferably, during the formation of the holographic image, the piece of information is positioned a distance (e.g. between 1 mm and 20 mm) away from the film, such that a parallax is created between the information in object form and the observed holographic image in the finished security item.

Desirably, the security item is formed by securing the information in object form and the holographic film to a common substrate, and preferably includes the step of sandwiching the information in object form between the substrate and the holographic film. Alternatively or additionally, the information in object form and the film can be encapsulated within a plastics holder, and this may include chemical bonding of the film to the holder.

Preferably, a single exposure is used to produce holographic images of a plurality of pieces of information for a plurality of security items. In this case, during exposure the pieces of information can be positioned on a common sheet-like substrate.

Desirably, the exposure is performed by placing the holographic film onto a plate having in a surface thereof recesses which are connected to a source of vacuum, such that the film overlies the recesses with at least some of the recesses being disposed away from the edges of the film. Conveniently, the recesses are arranged in a grid-like formation, and each interstice of the grid defines an area of the film where an image of a respective one of the pieces of information is formed.

In a particular example of the method, the exposure is performed using apparatus which comprises a film carrier and a data carrier which is mounted for lateral sliding movement relative to the film carrier, said piece or pieces of information are loaded into the data carrier while the latter is displaced laterally from the film carrier, and the data carrier is moved to a position closely adjacent to the film carrier prior to the actual exposure. Preferably the data carrier runs on rails which are fixed relative to the film carrier and has slide elements which engage the rails and bearing elements which engage the film carrier, and the bearing elements hold the slide elements clear of the rails during the actual exposure.

The invention will now be further described, by way of example only, with reference to the accompanying drawing, in which:

Figure 1 is a schematic side view of apparatus used for producing a security item according to the present invention;

Figure 2 is a perspective view of a security item so produced;

Figure 3 is a schematic side view of apparatus for producing in volume security items according to the present invention;

Figure 4 is a plan view of part of the apparatus shown in Figure 3;

Figure 5 is a plan view of a data carrier which forms part of the apparatus depicted in Figure 3;

Figure 6 is a view in the direction of arrow A in Figure 5;

Figure 7 is a diagram of pieces of information for use in the production of security items using the apparatus shown in Figures 3 to 6; and

Figure 8 shows a stage in the production process.

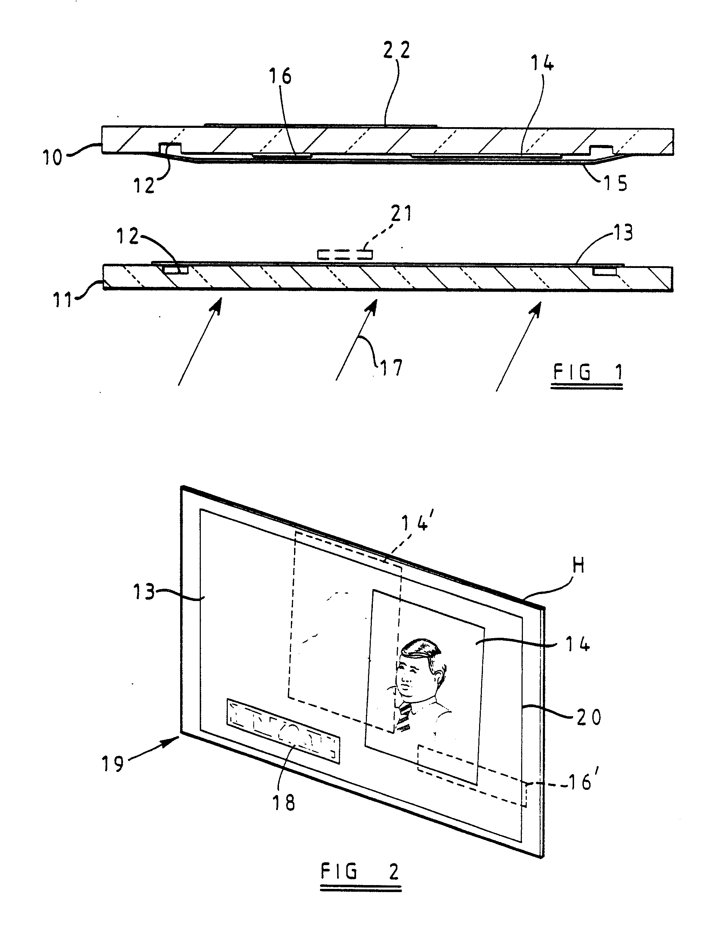

The apparatus depicted schematically in Figure 1 forms part of a holographic camera for producing white light reflection holograms, and comprises generally upper and lower transparent plates 10 and 11 which can be positioned an adjustable distance apart. In their confronting surfaces, the plates 10 and 11 are provided with grooves 12 to which suction is applied in use, whereby items placed on those plates are held motionless during an exposure.

In order to produce a security item according to the invention, a holographic film 13 is placed upon the lower plate 11, while a piece of information (in this case a photograph 14 of an individual) is placed between the upper plate 10 and a retaining piece of transparent film 15. If desired, other information can also be placed between the film 15 and the plate 10 at this time, such as a piece of card or paper 16 bearing the name and/or address of the individual shown in the photograph, the company or organisation for which he or she works, identification of an event, the date, etc. The holographic film 13 is then exposed to a laser beam 17, with the photograph 14 and other information 16 (if used) being positioned on the opposite side of the film 13 from the direction of incidence of the beam 17, to form a reflection holographic image in the film 13. The film 13 is then processed to develop the image, and the photograph 14 is secured to the film 13 (along with any other information 18 as may be appropriate) to form a security badge or pass 19 as shown in Figure 2.

In the finished badge or pass 19, the photograph 14 appears in object form side-by-side with a holographic image 14' thereof, so that when viewed in suitable lighting conditions a direct comparison can be made between the "real" photograph and the holographic image. Of course, where additional information 16 is included in the hologram, a holographic image 16' of this will also appear in the finished badge or pass. If a forger substitutes his or her photograph for the photograph 14, then this will be readily detectable because the photograph will no longer match the holographic image 14'. To match the image 14' with the forger's own photograph will effectively require the creation of a new badge or pass from scratch: this will in turn require the forger to have access to holographic equipment, which is unlikely to be the case. If desired, an additional degree of security can be incorporated into the badge or pass by including in the hologram matter which is hard to forge, so that even if the forger should gain access to holographic equipment, a forgery will still be very difficult to produce.

In order to improve the brightness of the holographic image 14', and thereby facilitate ready comparison with the real image 14, the film 13 is bonded to a substrate 20 whose surface confronting the film is dark-coloured, at least in the region of the holographic image 14' itself. If desired, the substrate 20 can be dark-coloured only in the region of the image 14', with the remainder being light-coloured to receive printed information thereon.

Although the holographic image 14' can be made to appear in approximately the same plane as the photograph 14 by placing the latter directly upon the holographic film 13 in the camera, as an additional security measure it is desirable that the photograph 14 is positioned a distance away from the holographic film 13 in the camera so that a parallax is created between the photograph and the observed holographic image in the finished badge or pass, as depicted in Figure 2. This will result in the badge or pass being very difficult to forge without losing this parallax. For optimum results in this regard, the photograph 14 is desirably placed between 1 mm and 20 mm from the film 13 in the holographic camera.

During the production of the hologram, other matter can be incorporated into the holographic image for additional security. This matter can be placed for example directly upon the film 13 in the camera (as indicated in broken line at 21 in Figure 1), or behind the upper plate (as indicated at 22). In a particular example of this, an embossed reflection hologram is positioned behind the plate 10 to form an overall background for the holographic image.

Because the embossing will be reproduced in the holographic image, there will be seen in the finished badge or pass not only a holographic image of the photograph 14, but also a three-dimensional holographic image derived from the embossed hologram. This will again considerably reduce the possibility of the badge or pass being forged.

It is not essential to the invention that the photograph as employed in the badge is absolutely identical to the photograph used to produce the holographic image. A measure of security can still be obtained if these two photographs are recognisably of the same person, although they may have been taken at different times.

As mentioned above, the badge or pass 19 can be produced by bonding the film 13 to a substrate 20. In this case, the photograph 14 can be sandwiched between the film and the substrate, or alternatively the photograph 14 can be sealed into a pocket formed on the front surface of the film 13 itself. The other information 18 (if used) can likewise be sandwiched between the film 13 and the substrate 20, or may be printed directly onto the front surface of the film 13.

In a particular embodiment shown, the assembly of the film 13, the photograph 14 and the substrate 20 is encapsulated within a plastics holder H, and the encapsulation process is arranged chemically to bond the film 13 to the material of the holder H. This not only gives an additional measure of security, but also renders the badge highly durable and environmentally stable: in particular, it is not possible for moisture to enter the badge and cause separation of its components.

In the illustrated embodiment, the photograph and its holographic image are laterally spaced apart in the finished badge or pass, but other relative dispositions can equally well be used. Also, although it is desirable that a photograph is used as the basis for the holographic image because the wearer or user can readily be recognised from that photograph, it is not essential to the invention that a photograph is included: a measure of security can still be obtained by representing any piece of information as an object and an identical holographic image.

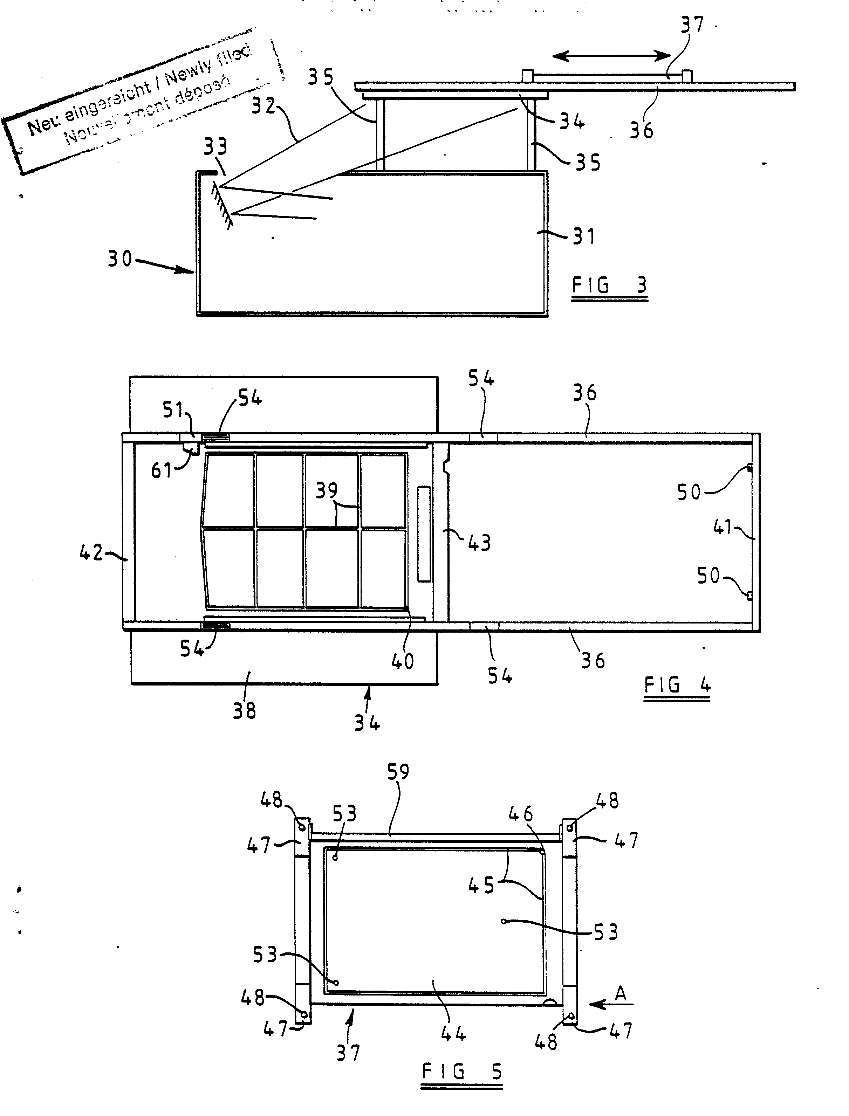

In Figure 3, there is illustrated apparatus for producing in volume security badges or the like of the type described above, in the form of a holographic camera 30. The camera comprises generally a casing 31 which houses a source of laser light and the necessary optics for producing an expanded laser beam 32, which issues obliquely from an opening 33 in the top of the casing 31. This beam is incident from underneath upon a film carrier 34 which is supported above the casing 31 by legs 35. Attached to the film carrier 34 and extending laterally away therefrom are a pair of rails 36 on which is slidably mounted a data carrier 37.

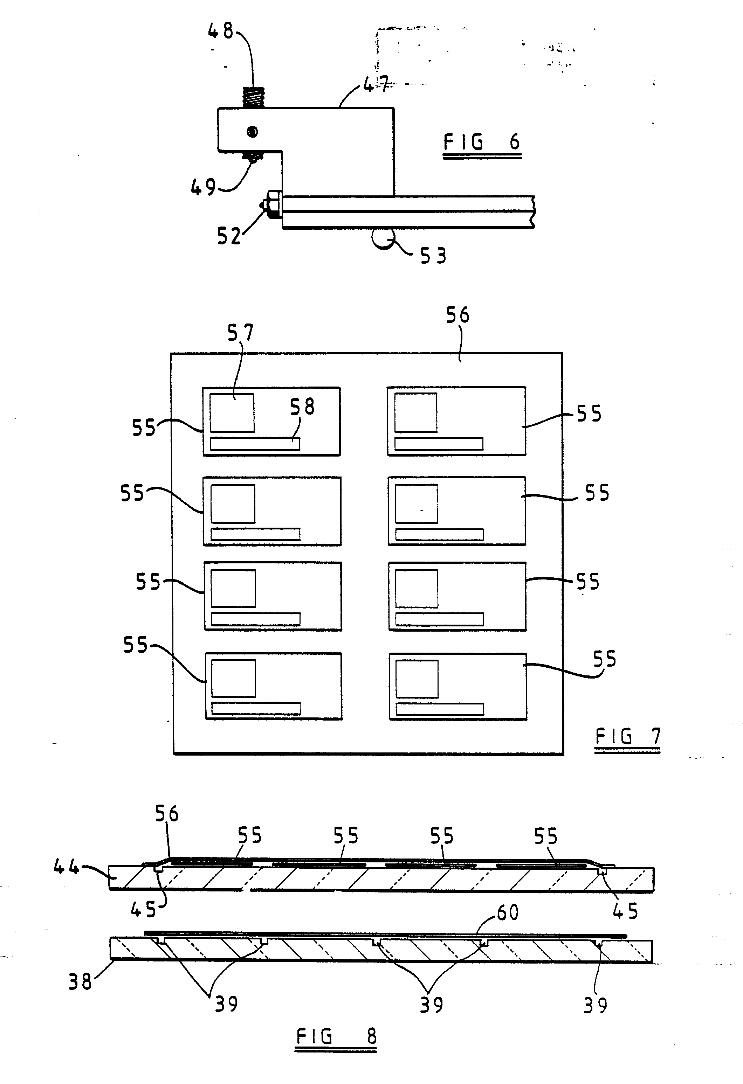

The film carrier 34 is shown in detail in Figure 4, and comprises a transparent plate 38 having a series of recesses (in the form of grooves) 39 formed in its upper surface. The grooves 39 form a grid-like arrangement, and communicate with a connector 40 which is connected to a source of vacuum. Secured to the plate 38 is a structure which incorporates the aforesaid rails 36, the rails being spaced apart by a spacer bar 41 and by two clamp bars 42 and 43 which embrace the plate 38.

The data carrier 37 (which is shown in detail in Figures 5 and 6) comprises a transparent plate 44 having grooves 45 formed in its upper surface. The grooves 45 are arranged in a rectangular configuration and communicate with a connector 46 which is connected to a source of vacuum. At each corner of the plate 44 there is provided a support block 47 which supports an adjustable slider element 48, the element having a domed lower end 49 which slidably engages one of the rails 36. The four elements 48 thus support the data carrier 37 on the rails for sliding movement between a first, loading position adjacent to the spacer bar 41 and a second, exposure position directly above the film plate 38. Buffers 50 on the spacer bar 41 and a stop block 51 on one of the rails 36 (see Figure 4) respectively define the limits of this sliding movement. At its sides, the data carrier 37 has locating screws 52 (see Figure 6, where only one is shown) whereby its lateral position relative to the rails 36 can be adjusted.

When the data carrier 37 is in its loading position, it is supported on the rails 36 by the four slider elements 48. However, as the carrier 37 is moved to its exposure position, bearing elements 53 on the underside of the plate 44 come into engagement with the film plate 38 and also perform a supporting function. When the data carrier 37 reaches the exposure position, ramps 54 formed on the rails 36 slope away from the slider elements 48 so that the carrier 37 is supported solely by the bearing elements 53. This ensures that the data carrier is firmly supported relative to the film carrier during an actual exposure. The bearing elements 53 are positioned on the plate 44 to ensure that they do not rest upon the grooves 39 in the film plate 38 in this situation.

As indicated above, this apparatus is for use in the volume production of security badges and the like. In order to commence such production, a plurality of pieces of information 55 (see Figure 7) are arranged in a rectangular array upon a sheet-like substrate 56. This array corresponds to the grid-like arrangement of the grooves 39 in the film plate 38, with each piece of information 55 effectively occupying a respective interstice of that grid. In the illustrated example, each piece of information comprises a photograph 57 of an individual and other data 58 such as the individual's name and/or address, wording identifying an event for which the security badge is to be used, etc. As shown in Figure 8, the substrate 56 and the pieces of information 55 are then placed face down upon the plate 44 of the data carrier 37 while the latter is in its loading position, with one edge of the substrate locating against a location rail 59 (see Figure 5) which extends along one side of the carrier 37. After flattening the substrate 56 upon the plate 44, the source of vacuum is switched on to apply suction to the substrate by way of the grooves 45; these grooves extend around the periphery of the array of information, and do not obstruct same in any way.

A piece of holographic film 60 is then placed upon the upper surface of the film plate 38, with a corner thereof engaging against a location stop 61 (see Figure 4). After flattening the film against the plate, the source of vacuum is switched on to apply a suction to the film 60 by way of the grooves 39. The data carrier 37 is then moved to its exposure position, whereupon an exposure can be made after a suitable delay to allow mechanical vibrations and air currents to die down. Following this, the data carrier 37 is returned to its loading position, the vacuum source is switched off to release the exposed film 60, and the film can then be processed. All of these procedures will of course be conducted in a darkroom under safelight conditions. The information on the data carrier can then be changed and the process repeated until the required number of exposures have been made.

After development, each piece of film 60 will bear a plurality of holographic images, each of which corresponds to a respective piece of information. The film can then be cut to separate these images, with each piece of film then being incorporated into a badge or the like in the manner described previously.

Because of the relatively large format of the holographic film, it would normally be necessary to leave a long settling down period between placing the film 60 on the film plate 38 and actually commencing the exposure, or to use a mechanical roller to speed the settling operation. However, in the arrangement just described the presence of some of the suction grooves 39 away from the periphery of the film 60 ensures that even the central region of the film is held firmly against the film plate 38, so that the setting time is considerably reduced. This facilitates production of a large number of security badges in a relatively short period of time. During the actual exposure, the grooves 39 are positioned around each part of the film 60 on which an image of a respective piece of information 55 is formed, and do not therefore cause unwanted shadowing on the images. A similar arrangement of grooves can also be employed in the plate 44 to facilitate rapid settling of the information 55 and the substrate 56.

In comparison with the arrangement depicted in Figure 1, the pieces of information 55 and the substrate 56 are disposed on a surface of the plate 44 remote from the incident laser beam. This facilitates placement of the information in the apparatus and the setting of that information relative to the film 60. The presence of the intervening transparent material of the plate 44 is found not to affect image quality appreciably.

## Claims

1. A security item characterised by at least one piece of information displayed as an object (14) and an identical or similar holographic image (14') within a common visual field.

2. A security item as claimed in claim 1, wherein the information (14) and the observed holographic image (14') exhibit parallax.

3. A security item as claimed in claim 1 or 2, wherein the information in object form (14) and a film (13) bearing the holographic image (14') are secured to a common substrate (20), the information preferably being sandwiched between the substrate (20) and the film (13).

4. A security item as claimed in claim 1, 2 or 3, wherein the information in object form (14) and a film (13) bearing the holographic image (14') are encapsulated within a plastics holder (H), the film (13) preferably being chemically bonded to the holder (H).

5. A security item as calimed in any preceding claim, wherein the holographic image (14') is formed by a reflection hologram, preferably a white light reflection hologram.

6. A security item as claimed in claim 5, wherein a film (13) bearing the holographic image (14') is mounted on a substrate (20) which incorporates a dark-coloured area at least in the region of the observed holographic image (14').

7. A security item as claimed in any preceding claim, wherein said piece of information comprises a photograph (14) of an individual.

8. A security item as claimed in claim 3, wherein said piece of information also includes personal details of the individual depicted in the photograph (14).

9. A method of producing security item, characterised by the formation by means of an exposure on holographic film (13) of a holographic image (14') of a piece of information, development of the holographic image (14'), and disposition in a common visual field of the developed film (13) and, in object form (14), the same or a similar piece of information as was used to produce the holographic image (14').

10. A method as claimed in claim 9, wherein during the formation of the holographic image (14'), said at least one piece of information is positioned a distance (preferably between 1mm and 20mm) away from the film (13), such that a parallax is created between the information in object form (14) and the observed holographic image (14') in the finished security item.

11. A method as claimed in claim 9 or 10, wherein the security item is formed by securing the information in object form (14) and the holographic film (13) to a common substrate (20), with the information in object form (14) preferably being sandwiched between the substrate (20) and the holographic film (13).

12. A method as claimed in claim 9, 10 or 11, wherein the security item is formed by encapsulating the information in object form (14) and the film (13) whithin a plastics holder (H), and preferably also by chemically bonding the film (13) to the holder (H).

13. A method as claimed in any one of claims 9 to 12, wherein a single exposure is used to produce holographic images of a plurality of pieces of information (55) for a plurality of security items.

14. A method as claimed in claim 13, wherein during exposure the pieces of information (55) are positioned on a common sheet-like substrate (56).

15. A method as claimed in claim 13 or 14, wherein the exposure is performed by placing the holographic film (60) onto a plate (38) having in a surface thereof recesses(39) which are connected to a source of vacuum, such that the film (60) overlies the recesses (39) with at least some of the recesses being disposed away from the edges of the film (60).

16. A method as claimed in claim 15, wherein the recesses (39) are arranged in a grid-like formation, and each interstice of the grid defines an area of the film where an image of a respective one of the pieces of information (55) is formed.

17. A method as claimed in any one of claims 9 to 16, wherein the exposure is performed using apparatus which comprises a film carrier (34) and a data carrier (37) which is mounted for lateral sliding movement relative to the film carrier (34), the piece or pieces of information (55), are loaded into the data carrier (37) while the latter is displaced laterally from the film carrier (34), and the data carrier (37) is moved to a position closely adjacent to the film carrier (34) prior to the actual exposure.

18. A method as claimed in claim 17, wherein the data carrier (37) runs on rails (36) which are fixed relative to the film carrier (34) and has slide elements (48) which engage the rails (36) and bearing elements (53) which engage the film carrier (34), and the bearing elements (53) hold the slide elements (48) clear of the rails (36) during the actual exposure.

19. A method as claimed in any one of claims 9 to 18, wherein during the exposure the piece or pieces of information (55) are mounted on the upper surface of a transparent plate (44) and the exposing beam is incident upon the piece of pieces of information through the plate.

22

16          14

10

12          15

21

12          13

11

17          FIG 1

14'

13          H

14

20

19

18          16'

FIG 2

FIG 3

FIG 4

FIG 5

FIG 6

FIG 7

FIG 8